Europäisches Patentamt

European Patent Office

Office européen des brevets

(11) Publication number: **0 331 984**
**A2**

## EUROPEAN PATENT APPLICATION

(21) Application number: 89103197.3

(51) Int. Cl.4: **B62M 3/08**

(22) Date of filing: 23.02.89

(30) Priority: 08.03.88 IT 8252388

(43) Date of publication of application:
13.09.89 Bulletin 89/37

(84) Designated Contracting States:
AT BE CH DE ES FR GB LI NL

(71) Applicant: QUIK-DAM SRL
Via B. Spadaro 10
I-97014 Ispica (RG)(IT)

(72) Inventor: De Martin, Antonio
Via Redipuglia 10
F-31010 Ponte Della Priula (TV)(IT)

(74) Representative: D'Agostini, Giovanni, Dr.
D'AGOSTINI ORGANIZZAZIONE n. 17 via
G.Giusti
I-33100 Udine(IT)

(54) A pedal device for bicycle and bicycle with said pedal.

(57) A pedal device for bicycle, characterized by the
fact that it comprises:
- a pedal means (A) with an upper delimited/able
longitudinal sliding guide means (3);
- a sliding engagement means (B) with:
- sliding means (5-5') inserted/able in controlled sliding condition in said sliding guide means (3) of said
pedal means (A); - attaching means (4,6) to fix said
sliding engagement means to a sole or support for a
sole (S) for inserting the foot of the cyclist.

FIG. 3

A-A

## A pedal device for bicycle and bicycle with said pedal

The subject of the present invention is a pedal device for bicycle. The bicycle mounting the pedals of this invention is further an object of this invention.

Bicycle pedals are known in the present state of art, being used as foot supporting surfaces and as means of transmitting force to a pedal crank which, in turn, engages on the gear wheel. The pedals generally consist in an essentially rigid and rotationally idle rectangular structure which has an orthogonal pivoting axis arranged longitudinally on the relative pedal crank.

Alternative solutions to the above, consist in realizing devices suitable to increase the performance of a bicycle by advancing the pedal in respect to the original pivoting point on the pedal crank. Such devices consist of a lever made up of a conveniently shaped rod where one end engages and slides on the bicycle's supporting frame and the pedal crank is pivoted near the opposite end which terminates in a common pedal. This solution determines the advancement of the pedal and consequently of the foot in respect to the original pivoting position on the pedal crank. Among the inconveniences to be found in such solutions is the fact of having to equip the bicycle with a lever which is not at all functional as it produces poor results and wastes a considerable amount of energy which could be recuperated, which furthermore hinders the cyclist's normal activity and thus determines encumbered movements and, lastly, even in a minimum part, increases weight.

The scope of the present invention is to eliminate the above-mentioned inconveniences.

This and other scopes are achieved by the present innovation, according to the characteristics given in the attached claims, which solve the above problems with a pedal device for bicycle, characterized by the fact that it comprises:
- a pedal means with an upper delimited/able longitudinal sliding guide means;
- a sliding engagement means with:
- sliding means inserted/able in controlled sliding condition in said sliding guide means of said pedal means; - attaching means to fix said sliding engagement means to a sole or support for a sole for inserting the foot of the cyclist.

This solution allowing advancement of the foot on the pedal, where the application point of the force of the foot is advanced in respect to the position of the pivoting axis of the pedal on the relative pedal crank thus obtaining a force which develops with the pedalling push along a circumference which is advanced in respect to the circumference made from the pivoting axis, and in a measure which corresponds to the distance from the point of application of the push/pull of the foot to the pivoting point of the pedal on the pedal crank, which is a supporting structure for the foot pivoted orthogonally on the pedal crank and on which guide means are obtained which has a means of engagement inserted/insertable to be associated/can be associated to a shoe sole.

Advantageously said sliding means in said pedal means is realized in an upside-down "U" shape, being the closure of the sliding guide forwards directed.

This allowing the easy insertion of the sliding engagement means and easy and fastly disengaging. The frontal closure being of further sure resistance.

In the preferred solution said sliding guide means of said pedal means is advanced in respect to the respective transversal pivoting axis of the crank.

The advantages obtained by this solution essentially consist in that it is possible to increment performances in parity to forces being used by over 20%, it does not involve increase in weight, it is a device which is easy to apply and has a relatively contained price and does not require other prearrangements than the common bicycle frame.

These and other advantages appear in the following detailed description of preferential solutions for realization and from the attached drawings, the execution details of which are not to be held as limiting but only as examples.

Figure 1 gives a plan view of a pedal means realized in a preferential solution with a delimited longitudinal sliding guide;

Figure 2 gives a plan view from below of a sliding engagement means for insertion in the pedal means of Figure 1, in which one of its portion can be fixed to a shoe sole and the opposite other must be inserted into the said delimited sliding guide of said pedal means;

Figure 3 gives a cross section along axis A-A of Figure 1 of the pedal and relative sliding engagement means associated to a sole;

Figure 4 gives a cross section along axis B-B of Figure 3 of the detail of the sliding means engagement.

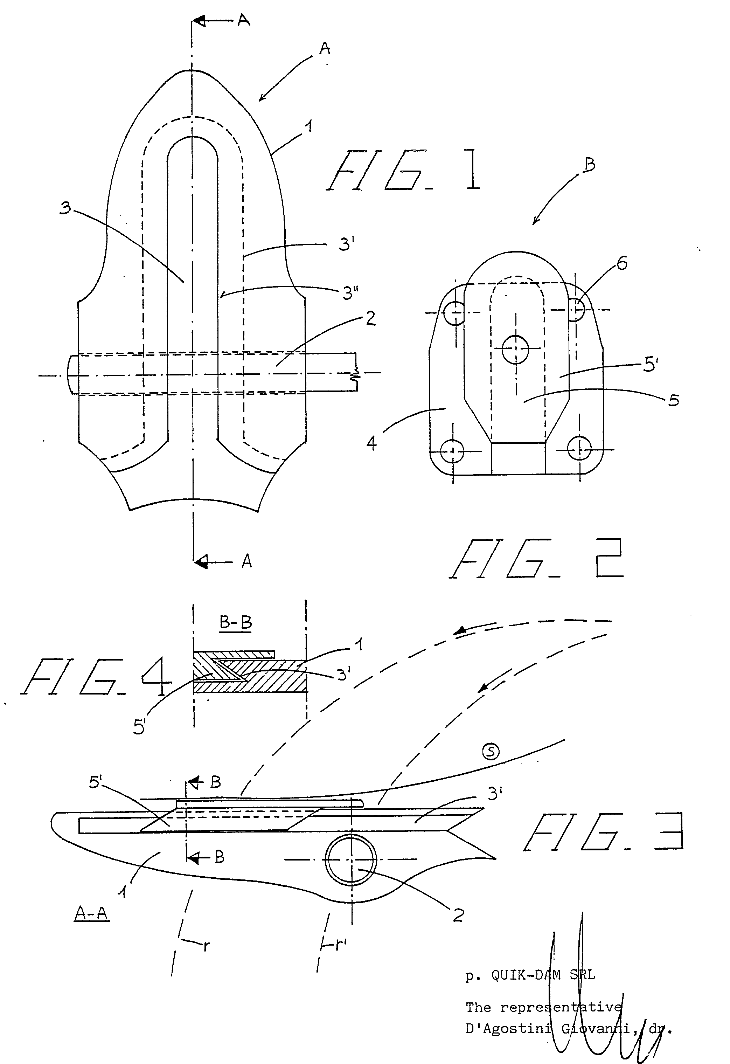

With reference to the respective figures, the present invention is an apparatus for allowing sliding of the foot, particularly on bicycle pedals, which essentially comprises a pedal means (A) pivoted on the relative pedal crank and a sliding engagement means (B) that comprise a sliding portion (5,5′) insertable to a sliding guide slot (3) of said pedal means (A) and further comprises a plate portion (4, 6) that is or can be associated to a sole (S).

Said pedal means (A) comprising an oblong structure realized in a sole block (1) in which a pivoting means (2) is sunk transversely and in a backward position on the relative pedal crank which transmits movement. Said sliding guide, comprises a seat (3) which is obtained inside said block (1) and in which a hollowing (3′) is perimetrically obtained so that a sealing edge (3″) juts above, is axially obtained on the upper part corresponding to the supporting surface of said pedal (1).

Said sliding portion comprises a fin (5′) with a plate (5), for being inserted in the sliding guide (3). In this way the advancement of the application point of the force of the foot is determined in respect to the pivoting of the transverse axis on the pedal crank, thus obtaining a force which develops along the circumference (r) while the transversal pivoting axis of the pedal still goes along circumference (r′). The diameter is unvariable in both circumferences because the advancement of the circumference (r) is equal to the measure corresponding to the distance from the point of application of the foot's push/pull to the pivoting point of the pedal on the pedal crank. Obviously convenient means to block the device in the desired advanced position of the foot are foreseen on pedal (A) and/or on the sliding engaging means (B). In one preferential solution, pedal (A) presents one side of the receiving seat (3) slightly widened as it is flexible in order to facilitate, by a rotary movement of the foot, the position chosen.

## Claims

1. A pedal device for bicycle, characterized by the fact that it comprises:
- a pedal means (A) with an upper delimited/able longitudinal sliding guide means (3);
- a sliding engagement means (B) with:
- sliding means (5-5′) inserted/able in controlled sliding condition in said sliding guide means (3) of said pedal means (A);
- attaching means (4,6) to fix said sliding engagement means to a sole or support for a sole (S) for inserting the foot of the cyclist.

2. Pedal for bicycle, as per claim 1, characterized by the fact that said sliding means (3) in said pedal means (A) is realized in an upside-down "U" shape, being the closure of the sliding guide forwards directed.

34. Pedal for bicycle, as per claims 1 and 2, characterized by the fact that said sliding guide means (3) of said pedal means (A) is advanced in respect of the respective transversal pivoting axis (2) of the crank.

4. A bicycle characterized by the fact that it comprises pedals with the features of previous claims.

FIG. 1

FIG. 2

FIG. 4

FIG. 3

B-B

A-A

p. QUIK-DAM SRL

The representative

D'Agostini Giovanni, dr.